# EUROPEAN PATENT SPECIFICATION

(11) **EP 0 970 582 B1**
(45) Date of publication and mention of the grant of the patent: **04.07.2001**
(21) Application number: 98913161.0
(22) Date of filing: 23.03.1998
(51) Int. Cl.: H04N 7/01

(54) **BILINEAR DECIMATOR WITH ERROR COMPENSATION**
BILINEARER DEZIMATOR MIT FEHLERKOMPENSATION
DECIMATEUR BILINEAIRE A COMPENSATION D'ERREURS

(30) Priority: 24.03.1997 US 822810; 05.06.1997 US 870095
(43) Date of publication of application: 12.01.2000
(73) Proprietor: Focus Enhancements, Inc., Wilmington, MA 01887 (US)
(72) Inventor: BOEHLKE, Kenneth, A., Beaverton, OR 97008 (US)
(74) Representative: Skone James, Robert Edmund
(86) International application number: US9805994
(87) International publication number: WO9843422

(56) References cited:
- EP-A- 0 575 862
- EP-A- 0 589 721
- WO-A-97/14247
- GB-A- 2 279 844
- US-A- 4 677 483
- US-A- 5 019 904

## Description

### Background of the Invention

### Field of the Invention

The present invention relates in general to a bilinear decimator for reducing the vertical resolution of a pixel-based image and in particular to a decimator which compensates for aliasing errors.

### Description of Related Art

An image formed by a set of N parallel lines of L pixels each may be represented by a matrix of pixel data values. Each pixel data value X(n,h) represents a visual characteristic (such as intensity or chroma) of the 1th pixel of the nth line of the image.

Since various standard video formats have differing numbers of lines, a pixel data matrix suitable for one video format may not be suitable for another. For example one computer video standard employs 768 lines and one television video format employs 400 lines. Although an image on the television may be the same size as an image on the computer screen, it has lower resolution in the vertical direction.

It is sometimes desirable to display image on one video system in response to a pixel data matrix generated by another. One of the problems associated with doing that is adjusting the size of the data matrix representing the image to match the standard of the video system that is to display the image. For example, in order to convert a pixel data matrix having 786 rows of data (one for each line of the computer video image) to a pixel data matrix having 400 rows of data (one for each line of the television image) we have to reduce the number of rows of data in the matrix. One method of doing that is simply to throw out the extra 386 rows of data. Depending on which rows of data we throw out, this would have the effect of clipping a part of the image when it is displayed. To retain some semblance of the full image on the television screen we could remove (decimate) rows of data in an distributed manner so that every second or third line of the image would be remove. However such an image would somewhat distorted because all of the information contained in decimated lines would be lost and the information contained in the retained lines would be over represented in the television image.

For example, suppose a high resolution image produces a certain shade of gray in an area of the image by vertically alternating black and white pixels. If we reduce resolution of the image, for example, by 50% by removing every other line of the image, the gray area in the lower resolution image will appear either all white or all black. This error condition arises because the decimation pattern matches a pixel pattern in the image. Such an error condition is called "aliasing".

U.S. Patent No. 5,469,222 issued Nov. 21, 1995 to Sprague discloses a decimating filter for lowering the vertical resolution of an image through a process of interpolation. If we superimpose high and low vertical resolution versions of the same image, each pixel of the lower resolution image will fall between vertically adjacent pixels of the higher resolution image. Sprague's filter computes the value of each pixel of the lower resolution image as a weighted sum of the two vertically adjacent pixels of the higher resolution image. The weights are inversely proportional the distance between the output pixel and the adjacent pixels of the input image. Thus for example when reducing the resolution of an image by 50%, instead of throwing out every other pixel line, Sprague's filter produces one output image line for each pair of input image lines, where the intensity or color of a pixel of the output image line is the average intensity or color of vertically adjacent pixels of the two input lines. Since all of the data of the high resolution image has an equal influence on the low resolution image, the lower resolution image is less subject to aliasing errors than if it were produced by simply throwing out every other line of the high resolution image.

The decimation ratio P/N of a filter is the number (P) of lines in the low resolution image divided by the total number of lines (N) of the high resolution image. Sprague's filter employs fixed weighting factors for a given decimation ratio. That means that the relative position of each pixel of the output image is fixed in relation to its vertically adjacent neighbors and does not change from line to line. This is only true for decimation ratios that reduce to the form 1-(1/n) where n is an integer. Thus Sprague's decimator can decimate by a factor of 1/2, 3/4, 7/8 ... 1-(1/n). It cannot, for example, turn a 768 line image into a 400 line image because it is not capable of producing a decimation ratio of 368/768 (25/48).

U.S. Patent No. 5,253,041 issued Oct. 12, 1993 to Wine et al, U.S. Patent No. 4,204,227 issued May 20, 1980 to Gurley, and U.S. Patent 5,159,451 issued Oct. 27, 1992 to Faroudja et al all disclose decimators which use fixed weighting factors for computing pixel values and are thus restricted to decimation ratios of the form 1- (1/n) .

U.S. Patent No. 5,019,904 issued May 28, 1991 to Campbell discloses a decimating filter which uses a lookup table to provide weighting factors that are functions of relative position of an output image pixels with respect to nearby pixels of the input image. Thus a pixel in any given line of the lower resolution output image is not restricted to a particular position with respect to vertically adjacent pixels of the higher resolution input image. Lacking such restriction, Campbell's weighting factor lookup table can be programmed to provide any vertical decimation ratio of the form P/N where P and N are integers. Thus Campbell's system is capable of implementing the 368/768 decimation ratio needed to lower the vertical resolution of the 768 line computer image to the 400 lines of television image.

To further reduce the likelihood of aliasing errors, Campbell's system uses data from the six vertically nearest pixels of the high resolution image, rather than two. Thus each output pixel data value is a weighted sum of contributions from six vertically adjacent pixels of the input image. The two high resolution image pixels nearest the low resolution image pixel are given more weight the remaining four. This reduces aliasing errors. One problem with Campbell's decimator is its size and cost. With six weighting factors, Campbell's system requires six multipliers. Multipliers require a lot space on an integrated circuit and are therefore expensive.

All prior art decimating systems which compute output pixel values as weighted combinations of values of N vertically adjacent input pixels require the use of at least N multipliers in order to apply the weights to the input pixels. Some system employ even more than N multipliers. U.S. Patent No. 5,268,751 issued Dec. 7, 1993 to Geiger et al describes a polyphase FIR filter apparently employing fifteen fixed coefficients to produce a low resolution pixel as a weighted combination of 4 vertically adjacent high resolution pixels. However since the weighting factors are fixed, Geigher's system is restricted to a decimation ratio of 1-(1/n).

What is needed is a vertical decimation filter providing any desired decimation ratio of the form P/N (where P and N are integers P < N) but which minimizes aliasing errors when necessary without employing excessive numbers of multipliers.

### Summary of the Invention

An image may be formed by a set of horizontal lines of pixels. The present invention is a bilinear decimator which converts an input pixel data matrix representing a high resolution image formed by N lines of H pixels per line into an output pixel data matrix representing a lower resolution image formed by P lines of H pixels per line. P and N may be integers of any value where N > P. In the preferred embodiment of the invention, as described in detail herein below, the decimator computes a pixel data value for pixels of the low resolution output image as a weighted sum of pixel data values of the high resolution input image.

The input pixel data matrix has elements of the form X(n,h). Each element represents a value such as intensity or color of a corresponding pixel of the high resolution image. The subscript "n" denotes the line number of the pixel in the high resolution image and the subscript "h" denotes the horizontal position of the pixel along a line of the high resolution image. When the input sequence is applied to the decimator on a line by line basis, the decimator generates the output pixel data matrix having elements of the form Y(p,h) where "p" denotes the line number of a pixel of the low resolution and h denotes its horizontal position along line p.

In accordance with the invention, the decimator computes a preliminary output sequence Y(n,h) by implementing the following algorithm (expressed in pseudocode): 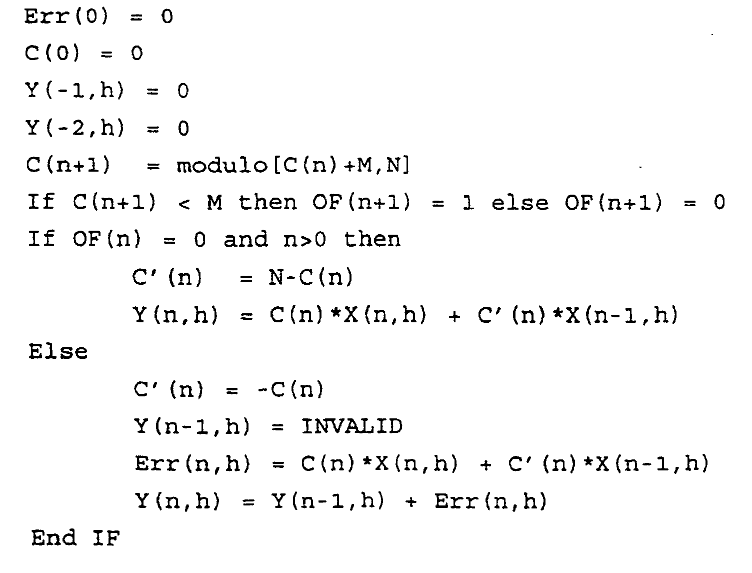 The decimator then produces a final output sequence Y(p,h) by removing all invalid elements Y(n,h) from the preliminary output sequence.

The decimator reduces aliasing by giving all pixel data elements of the input pixel data matrix the same amount of influence on the values of the computed output pixel data matrix. In other words, the total influence each input pixel data value has on the resulting low resolution image is a constant regardless of the position of the input pixel image or the decimation ratio implemented.

For decimation ratios P/N which reduce to 1-(1/n), the value X(n,h) of each input pixel has a positive influence on the values Y(p,n) and Y(p+1,h) of two vertically adjacent pixels of the output image with the weighting being determined by the input image pixel's position with respect to those two output image pixels. However, for decimation ratios P/N which do not reduce to 1-(1/n), where necessary to reduce aliasing, an output pixel value Y(p,h) is computed as a weighted sum of three input pixel values. Despite the fact that some output pixel data values are weighted sums of three input pixel data values, only two multipliers are employed to compute the weighted sum.

It is accordingly an object of the invention to provide a decimation filter that can convert an input pixel data sequence representing an image having high vertical resolution to an image having lower vertical resolution.

It is another object of the invention to provide a decimation filter that provides for a flexibly adjustable decimation ratio.

It is a further object of the invention to provide a decimation filter that compensates for aliasing errors without employing an large number of multipliers to carry out weighting operations.

These objects are achieved by the method and the apparatus as set out in the claims.

The concluding portion of this specification particularly points out and distinctly claims the subject matter of the present invention. However those skilled in the art will best understand both the organization and method of operation of the invention, together with further advantages and objects thereof, by reading the remaining portions of the specification in view of the accompanying drawing(s) wherein like reference characters refer to like elements.

### Brief Description of the Drawing(s)

FIG. 1 illustrates a high resolution image formed by a set of horizontal lines of pixels,
FIG. 2 represents a lower resolution version of the image of FIG. 1,
FIG. 3 illustrates a superposition of the lower resolution image of FIG. 2 over the higher resolution image of FIG. 1,
FIG. 4 is a block diagram illustrating a video conversion system in which pixel data matrix produced by a high resolution video source controls a lower resolution display,
FIG. 5 is a block diagram of the bilinear decimator of FIG. 4,
FIG. 6 illustrates the spatial relationships between pixel lines of a 16 line image and pixel lines of a 14 line image, and
FIG. 7 illustrates the spatial relationships between pixels lines of a 16 line image and pixel lines of a 10 line image.

### Description of the Preferred Embodiment(s)

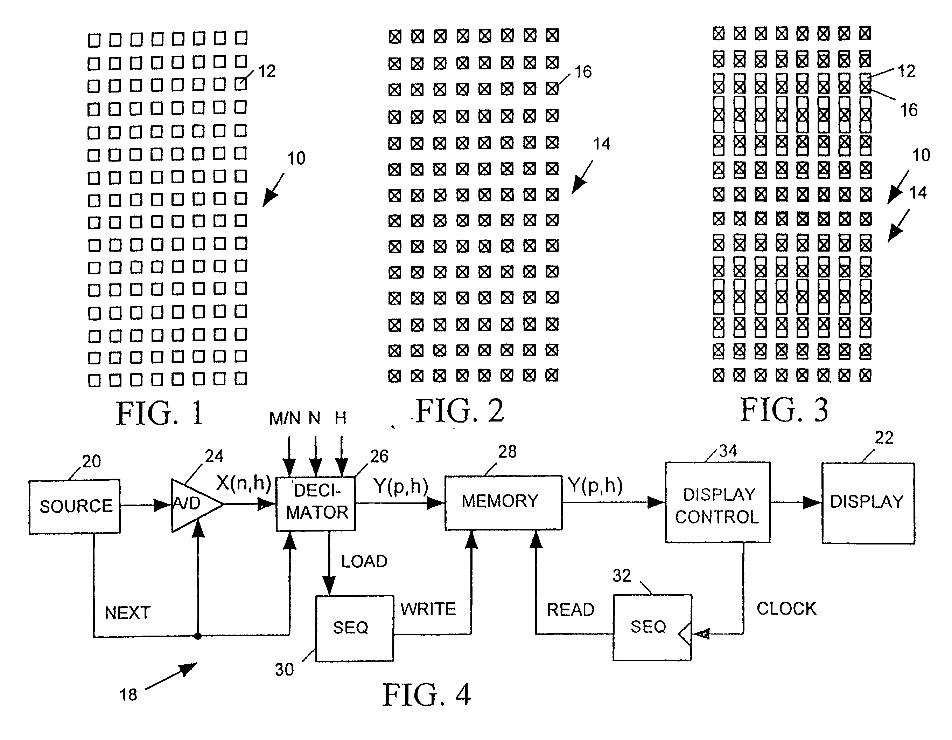

FIG. 1 illustrates a high resolution image 10 formed by a set of N horizontal lines of pixels 12 having H pixels per line. In this case N is 16 and H is 8. For simplicity image 10 is illustrated as a pattern of white squares that would appear to be a solid block of white from a distance. However each pixel 12 could have a separately determined color and/or intensity so that image 10 would appear as a more complicated pattern.

Image 10 can be represented as an NxH matrix of pixel data values of the form X(n,h) where the variable "n" is the pixel line number of a corresponding pixel. The variable n is a member of the set {0....N-1}. The variable "h", a member of the set {0,1,...H-1}, represents the pixel's horizontal position along line n. The value of each element X(n,h) is encoded to represent the appearance of the corresponding pixel, for example, in terms of its color and/or intensity.

FIG. 2 represents an image 14 that is a lower resolution version of image 10 of FIG. 1. Image 14 could be represented by a PxH matrix of pixel data Y(p,h) where P is 14 and H is 8. Here "p", the line number of a pixel in of image 14, is a member of the set {0,1, ... 13} and h is its horizontal position, a member of the set {0,1, ...7}.

FIG. 3 illustrates a superposition of the lower resolution image 14 of FIG. 2 over the higher resolution image 10 of FIG. 1. To enable us to distinguish between pixels of the two images, pixels 16 of lower resolution image 14 are marked with an "X". Note that image 14 is the same size as image 10 but has 14 lines instead of 16. However the pixel lines of image 14 are spaced farther apart and each pixel 16 represents a larger vertical portion of the image.

When we reduce the number of pixels in an image, we remove some of the information about that image. The manner in which we remove information from the higher resolution image affects the appearance of the lower resolution image. For example if a high resolution image 10 of FIG. 1 had alternating lines of black and white pixels, it would appear to be a solid block of gray from a distance. We could lower its resolution to produce image 14 by removing a few lines of pixels. If we were to remove only white lines, image 14 would appear darker than image 10. If we remove only black lines, the image 14 would appear lighter. Such "aliasing" errors arise from the manner in which we choose to throw away information about an image when we lower its resolution. We can minimize aliasing errors by being careful about how we throw away information.

FIG. 4 is a block diagram illustrating a video conversion system 18. System 18 includes video source 20, such as for example a computer, produces an output analog signal representing an image having 460 horizontal lines with H pixels per line. This signal is suitable for driving a computer monitor, but it is not used for that purpose. Instead the video conversion system converts the video output of source 20 to another video signal suitable for driving a different kind of display monitor 22, such as for example a conventional television monitor 22 which displays a 400 line x H pixel image. To carry out the conversion, the output signal of video source 20 is first digitized by a digitizer 24 to produce a matrix of pixel data values X(n,h). Digitizer 24 generates the matrix as an output sequence starting with X(0,0) and ending with X(N,H) with pixel data incurring in the sequence on a line-by-line basis. Digitizer (D/A converter) 20 is clocked by the a signal (NEXT) pulsed by source 20 on a pixel-by-pixel basis.

The output pixel data matrix generated by digitizer 24 is then supplied to a bilinear decimator 26 in accordance with the present invention. Decimator 26 also has as input constants indicating the number of lines N in the high resolution image and a "decimation ratio" P/N. Thus decimator 26 knows the required relationship between the number of high and low resolution image lines. Decimator 26, also clocked by the NEXT signal, produces an output sequence conveying a matrix of pixel data values Y(p,h) representing the lower resolution output image. A sequencer 30, clocked by a LOAD signal generated by decimator 26 whenever it produces a valid output data value Y(p,h), sequentially addresses and write enables an input port of a two-port memory 28 so that the decimator output matrix values Y(p,h) are stored at sequential addresses in memory 28.

At the same time, another sequencer 32 responds to a CLOCK signal from a display control unit 34 by periodically read addressing and enabling read output port of memory 28 so that it sequentially supplies the pixel data matrix values Y(p,h) to formatting unit 34. Display control unit 34 converts the Y(p,h) data sequence in a conventional manner into a signal suitable for driving display monitor 22 so that it produces the lower resolution image.

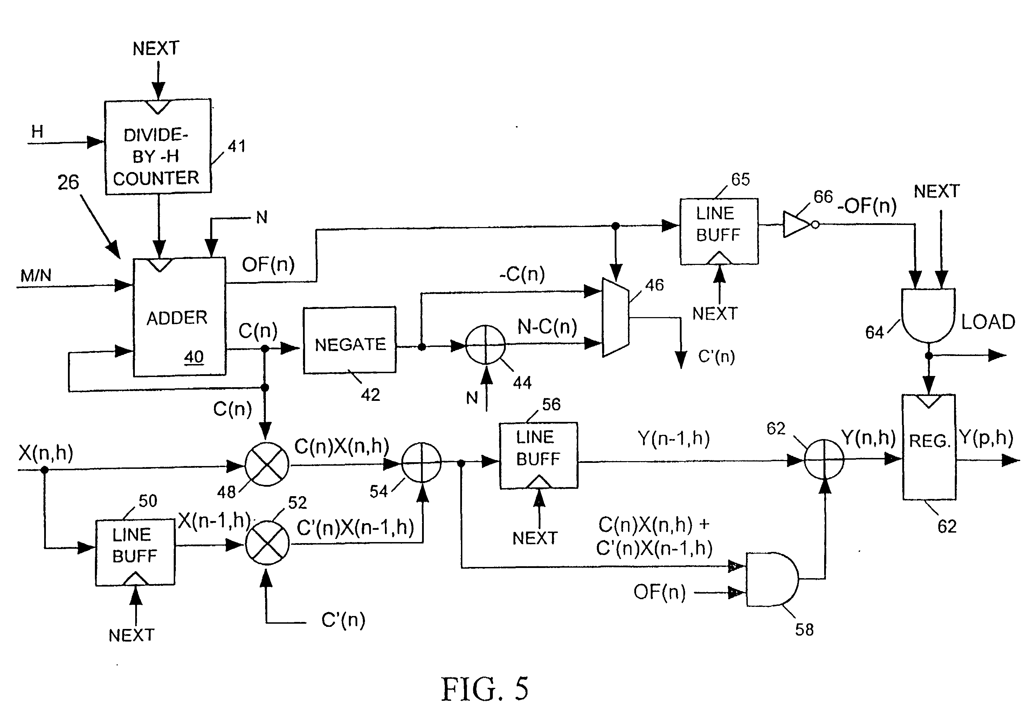

FIG. 5 is a block diagram the bilinear decimator 26 of FIG. 4 which converts the input data sequence conveying the NxH pixel data matrix of values X(n,h) representing a high resolution image into the output data sequence conveying a PxH pixel data matrix of values Y(p,h) representing the lower resolution image. We define "M" as the difference between N and the number of line P in the low resolution image; M = N-P. Decimator 26 calculates each value Y(n,h) of a preliminary output matrix according to the following algorithm (expressed in pseudocode): 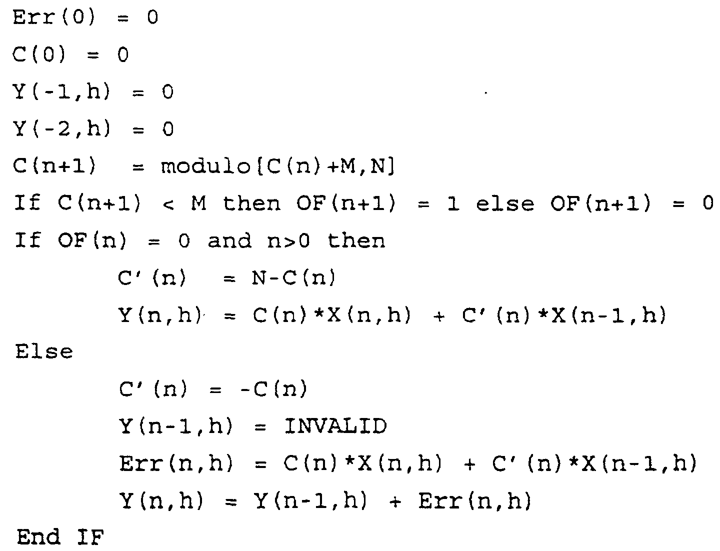 Decimator 26 then produces the final output sequence Y(p,h) by removing all invalid elements Y(n,h) from the preliminary output sequence.

Referring again to FIG. 5, decimator 26 includes an accumulator 40 for generating the coefficient C(n). As seen in the above pseudocode, C(n) is the weight given to the current input sequence value X(n,h) when computing the current output sequence value Y(n,h). Accumulator 40 includes an adder 40a and a register 40b input enabled by the output of a divide-by-H counter 41. The NEXT signal clocks counter 41. Counter 41 produces an output NEW LINE pulse at the start of each new line h of pixel data. Adder 40a, having a count limit N controlled by input control data N, adds an input decimation ratio M/N to the output C(n) of register 40b and supplies the result to an input of register 40b. The upper bit of the adder 40a output is an overflow bit OF(n+1). When that bit is stored in register 40b it becomes overflow bit OF(n).

The output of accumulator 40, coefficient C(n), increases with for each NEW LINE pulse by the amount of M/N. Thus C(n) changes regularly with pixel line number h, with the change being determined by M/N. Adder 40a overflows upon counting to N, and generates the overflow signal OF(n+1). On the next NEW LINE pulse, C(n) is reset to a low value and the OF(n) signal is asserted. A negater 42 negates C(n) to produce -C(n) and an adder 44 adds N to -C(n) to produce N-C(n). The -C(n) output of negater 42 and the N-C(n) output of adder 44 are applied to inputs of a multiplexer 46 controlled by the OL signal from accumulator 40. Multiplexer 46 produces C'(n) as its output.

A multiplier 48 multiplies the incoming pixel data value X(n,h) by C(n). A line buffer 50 delays each incoming X(n,h) pixel data value by H NEXT pulses so that it later becomes output pixel data value X(n-1,h) when the pixel data value for the adjacent pixel h of next line arrives at decimator 26. A multiplier 52 multiplies the X(n-1) output pixel data value of line buffer 50 by the C'(n) coefficient output of multiplexer 46. An adder 54 sums the outputs of multipliers 48 and 52. A line buffer 56 delays the output of adder 54 by H NEXT signal pulses (one line of pixel data) to produce the value C(n-1)^{*}X(n-1,h)+C'(n-1)^{*}X(n-2,h) supplied as an input to an AND gate 58. The OL(n) signal generated by accumulator 40 drives all bits of a second input of AND gate 58. An adder 60 sums the outputs of multiplexer 58 and adder 54 to produce a preliminary output data value Y(n,h) loaded into an output register 62 in response to each pulse of a LOAD signal produced by an AND gate 64. The NEXT signal drives one input of AND gate 64 and the OL(n+1) accumulator 40 output signal, inverted by an inverter 66, drives a second input of register 62. Register 62 only stores "valid" values of Y(n,h). Thus the output pixel data matrix values Y(p,h) appear sequentially at the output of register 62.

Two examples will illustrate the operation of decimator 26 and the algorithm that it implements.

### Example 1: P/N = 1-(1/n)

Let us assume that a "high" resolution image has N = 16 lines of H = 8 pixels each and that we want to turn this into a low resolution image having P = 14 pixel lines of H = 8 pixels each. Thus we have a decimation ratio of 14/16 which reduces to 7/8, of the form 1-(1/n). The spatial relationships of pixels of the high and low resolution images appear as illustrated in FIGS. 1, 2 and 3.

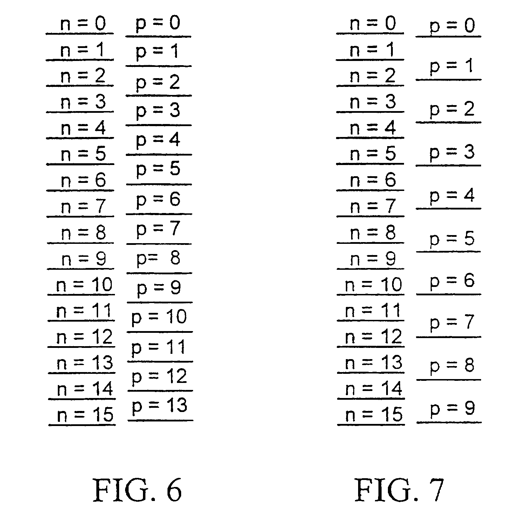

FIG. 6 illustrates spatial relationship between center lines of the 16 lines n of the high resolution image and the center lines of the 14 lines p of the low resolution image when both images have the same height. Note that since pixels of the low resolution image are slightly taller than pixels of the high resolution image, the center line of line p = 0 is slightly below the center line of line n = 0 and the center line of line p = 13 is slightly above center line of line n = 15.

To implement example 1, we apply a ratio M/N = 2/16 and a vertical line height N = 16 as inputs to decimator 26. Table I below illustrates how decimator 26 calculates the overflow parameter OL, coefficients C(n) and C'(n), error terms Err(n) and output sequence value, Y(p,h). (For simplicity, the h subscript of Err(n,h), X(n,h) and Y(p,h) are omitted.)

**TABLE I**

| n | OF(n) | C(n) | C'(n) | Err(n-1) | Y(n) | Y(p) | p |
|---|---|---|---|---|---|---|---|
| 1 | 0 | 1 | 7 | 0 | X(1)+7X(0) | X(1)+7X(0) | 1 |
| 2 | 0 | 2 | 6 | 0 | 2X(2)+6X(1) | 2X(2)+6X(1) | 2 |
| 3 | 0 | 3 | 5 | 0 | 3X(3)+5X(2) | 3X(3)+5X(2) | 3 |
| 4 | 0 | 4 | 4 | 0 | 4X(4)+4X(3) | 4X(4)+4X(3) | 4 |
| 5 | 0 | 5 | 3 | 0 | 5X(5)+3X(4) | 5X(5)+3X(4) | 5 |
| 6 | 0 | 6 | 2 | 0 | 6X(6)+2X(5) | 6X(6)+2X(5) | 6 |
| 7 | 0 | 7 | 1 | 0 | 7X(7)+1X(6) | - | - |
| 8 | 1 | 0 | 0 | 0 | - | 7X(7)+1X(6) | 7 |
| 9 | 0 | 1 | 7 | 0 | X(9)+7X(8) | X(9)+7X(8) | 8 |
| 10 | 0 | 2 | 6 | 0 | 2X(10)+6X(9) | 2X(10)+6X(9) | 9 |
| 11 | 0 | 3 | 5 | 0 | 3X(11)+5X(10) | 3X(11)+5X(10) | 10 |
| 12 | 0 | 4 | 4 | 0 | 4X(12)+4X(11) | 4X(12)+4X(11) | 11 |
| 13 | 0 | 5 | 3 | 0 | 5X(13)+3X(12) | 5X(13)+3X(12) | 12 |
| 14 | 0 | 6 | 2 | 0 | 6X(14)+2X(13) | 6X(14)+2X(13) | 13 |
| 15 | 0 | 7 | 1 | 0 | 7X(15)+ X(14) | - | - |
| 16 | 1 | 0 | 0 | 0 | - | 7X(1)+X(14) | 14 |

From Table I we first note that Err(n-1) is always zero. This arises because example 1 is a special case where the decimation ratio 14/16 reduces to the form 1-(1/n). Referring to FIG. 5, at n = 7, -Err(n+1) = -Err(8) = 0. Thus the Y(n,h) value is not loaded into register 62. At n = 8, AND gate 58 passes the output of line buffer 56 to adder 60. However, since coefficients C(8) and C'(8) are both 0, Err(8) remains 0.

Note in FIG. 6 that line p = 0 falls between line n = 0 and line n = 1 of the input image but is much closer to line n = 0. In fact it is seven times closer. Accordingly, from Table I we see that influence of X(0,h) on the output value Y(0,h) is seven times that of X(1,h). The next output line p = 1 falls between input lines n = 1 and n=2. However the output image pixel line p = 1 is a little farther from line n = 1 than output image line p = 0 is from input image line n = o. Accordingly we see from Table 1 that input pixel value X(1) has only three times the weight of the pixel value X(2). As we move progressively from line p = 0 to p = 8 the output image pixel line moves progressively closer to the next higher numbered line of the input image. The weighting factors C(0) and C'(0) change accordingly. Note that there is no output image line p between input pixel lines n = 7 and n = 8 and that the Y(n) value for n = 8 is invalid.

Thus as may be seen from Table I, where P/M is of the form 1-(1/n), the value of output data Y(p,h) for a pixel at position h of line p is a weighted sum of pixel data values X(n,h) and X(n+1,h) for pixels of the two adjacent input image lines which vertically bound the pixel at position h of the output image line p. The weighting factors are inversely proportional to the vertical distance of the output image pixel from its nearest neighbor input image pixels.

If we sum the weighting coefficients for each value of X(n) in Table I we obtain a measure of the relative influence each value of X(n) has on the overall appearance of the low resolution image. Table II lists the results of the coefficient summation:

**TABLE II**

| X(n) | Rel. Infl. | X(n) | Rel. Infl. |
|---|---|---|---|
| X(0) | 7 | X(8) | 7 |
| X(1) | 7 | X(9) | 7 |
| X(2) | 7 | X(10) | 7 |
| X(3) | 7 | X(11) | 7 |
| X(4) | 7 | X(12) | 7 |
| X(5) | 7 | X(13) | 7 |
| X(6) | 7 | X(14) | 7 |
| X(7) | 7 | X(15) | 7 |

Thus each value of X(n) has the same relative influence on the appearance of the low resolution image. This is desirable because if some values of X(n) were to have greater influence than others, aliasing errors would be introduced into the low resolution image. In the special case considered in example 1, where the decimation ratio is of the form 1-(1/n), when we can compute each value of Y(p) for any pixel of the low resolution image as a simple distance weighted sum of values X(n-1) and X(n) for vertically adjacent pixel of the high resolution image without having to compensate for aliasing errors since each value X(n) will have equal influence on the low resolution image, thereby minimizing aliasing errors. Example 2: P/N <> 1-(1/n)

A somewhat more complicated situation arises when the decimation ratio P/N is something other than of the form 1-(1/n). In example 2 we choose N to be 16 and M to be 6. Thus the input image has 16 lines and the output image has 10. FIG. 7 illustrates the spatial relationship between center lines of the 16 lines n of the high resolution image of example 2 and the center lines of the 10 lines p of the low resolution image when both images have the same height. Here the required decimation ratio is 10/16 is not reducable to the form 1-(1/n).

First let us determine what the values of Y(p) would be if we simply compute each value of Y(p) as an uncompensated, weighted sum of values X(n) and X(n-1) for the two high resolution image pixels vertically bounding each low resolution image pixel, with weighting being inversely proportional to the distance between lines of low and high resolution pixels. Table III illustrates the (approximate) results.

**TABLE III**

| Y(p) | Value |
|---|---|
| Y(1) | 1X(1) + 7X(0) |
| Y(2) | 6X(2) + 2X(1) |
| Y(3) | 3X(4) + 5X(3) |
| Y(4) | 1X(6) + 7X(5) |
| Y(5) | 5X(7) + 3X(6) |
| Y(6) | 2X(9) + 6X(8) |
| Y(7) | 7X(10)+ 1X(9) |
| Y(8) | 3X(12)+ 5X(11) |
| Y(9) | 2X(14)+ 6X(13) |
| Y(10) | 7X(15)+ 1X(14) |

Again, if we sum the weighting factors for each value of X(n) in Table III we can obtain a measure of the relative influence each value of X(n) has on the overall appearance of the low resolution. Table IV lists the results:

**TABLE IV**

| X(n) | Rel. Infl. | X(n) | Rel. Infl. |
|---|---|---|---|
| X(0) | 7 | X(8) | 6 |
| X(1) | 3 | X(9) | 3 |
| X(2) | 6 | X(10) | 7 |
| X(3) | 5 | X(11) | 5 |
| X(4) | 3 | X(12) | 3 |
| X(5) | 7 | X(13) | 6 |
| X(6) | 4 | X(14) | 3 |
| X(7) | 5 | X(15) | 7 |

From Table IV we see that some values of X(n) have more than twice the influence on the appearance of the low resolution image than other values of X(n) and that the relative influence of X(n) is highly dependent on n. Thus when the decimation ratio is other than of the form 1-(1/n) and we compute Y(p) as simply a weighted sum of values X(n) and X(n-1) of the two nearest vertically adjacent high resolution image, we introduce aliasing errors into the low resolution image. Such errors arise because some high resolution image pixel data values are given too much influence in the computation of the low resolution image pixel values while high resolution image pixel data value are given too little influence. Decimator 26 of FIG. 5 is designed to compensate for this kind of error by ensuring that values X(n) for all pixels of the high resolution image have equal overall influence in the computation of the low resolution image pixel data.

Suppose now that we use decimator 26 of FIG. 5 to compute the values of Y(p) for example 2. In this case, the decimation ratio P/N supplied as input to decimator 26 is 10/16 and the value of N is 16. Table V illustrates results of decimator 26 operation.

**TABLE V**

| n | OF | C(n) | C'(n) | Y(n) | Err(n) | Y(p) | p |
|---|---|---|---|---|---|---|---|
| 0 | 1 | 0 | 0 | - | 0 | 0 | 0 |
| 1 | 0 | 3 | 5 | 3X(1)+5X(0) | - | 3X(1)+5X(0) | 1 |
| 2 | 0 | 6 | 2 | 6X(2)+2X(1) | - | - | - |
| 3 | 1 | 1 | -1 | - | 1X(3)-1X(2) | 1X(3)+5X(2)+2X(1) | 2 |
| 4 | 0 | 4 | 4 | 4X(4)+4X(3) | - | 4X(4)+4X(3) | 3 |
| 5 | 0 | 7 | 1 | 7X(5)+X(4) | - | - | - |
| 6 | 1 | 2 | -2 | - | 2X(6)-2X(5) | 2X(6)+5X(5)+1X(4) | 4 |
| 7 | 0 | 5 | 3 | 5X(7)+3X(6) | - | - | - |
| 8 | 1 | 0 | 0 | - | 0 | 5X(7)+3X(6) | 5 |
| 9 | 0 | 3 | 5 | 3X(9)+5X(8) | - | 3X(9)+5X(8) | 6 |
| 10 | 0 | 6 | 2 | 6X(10)+2X(9) | - | - | - |
| 11 | 1 | 1 | -1 | - | 1X(11)-1X(10) | 1X(11)+5X(10)+2X(9) | 7 |
| 12 | 0 | 4 | 4 | 4X(12)+4X(11) | - | 4X(12)+4X(11) | 8 |
| 13 | 0 | 7 | 1 | 7X(13)+1X(12) | - | - | - |
| 14 | 1 | 2 | -2 | - | 2X(24)-2X(13) | 2X(14)+5X(13)+1X(12) | 9 |
| 15 | 0 | 5 | 3 | 5X(15)+3X(14) | - | 5X(15)+3X(14) | 10 |

Here the Err(n-1) value for several values of n is non-zero. This causes several values of Y(n) to have three terms, weighted pixel data values X(n), X(n-1) and X(n-2) of three vertically adjacent pixels of the input high resolution image. Note that the three weighted terms require three multiplications even though decimator 26 employs only two multipliers to carry them out. At n = 2 the value of Y(n=2) is 6X(2) +2X(1), the weighted average for the input pixels that vertically bound the output pixel define by output data Y(p=2). Decimator 26 does not immediately load Y(n=2) into register 62 but instead waits until n = 3, computes an error term X(3) - X(2), adds the error term to Y(n=2) to produce Y(n=3) and stores the result in register 62 as Y(p=2).

It is instructive to compare Table III with Table V. In Table III Y(p) is always the weighted sum of two vertically adjacent pixel data values. Note that X2 is over-represented in Table III. As seen in Table V, decimator 26 compensates for over-representation and under-representation errors by computing an error term and adding it to the weighted average. Thus we see that for Y(p=2) decimator 26 added error term Err(n=3) = X(3)- X(2) to the weighted average Y(n=2) = X(2)+2X(1) to obtain output value Y(p=2). Now, if we sum the coefficients for each value of X(n) appearing in Table V we obtain a measure of the overall influence each high resolution image pixel has on the resulting low resolution image. Note that since some of the coefficients are negative, they have a subtractive, rather than an additive, effect on the computation of a term's relative influence. Table VI lists the results of the coefficient summation.

**TABLE VI**

| X(n) | Rel. Infl. | X(n) | Rel. Infl. |
|---|---|---|---|
| X(0) | 5 | X(8) | 5 |
| X(1) | 5 | X(9) | 5 |
| X(2) | 5 | X(10) | 5 |
| X(3) | 5 | X(11) | 5 |
| X(4) | 5 | X(12) | 5 |
| X(5) | 5 | X(13) | 5 |
| X(6) | 5 | X(14) | 5 |
| X(7) | 5 | X(15) | 5 |

We see from Table VI that all pixel data value X(15) have equal influence on the calculation of the pixel data controlling the appearance of the output image.

Thus has been described a bilinear decimator for converting an input data sequence representing an image formed by N pixel lines to an output data sequence representing an image formed by P pixel lines where N > P. In particular the bilinear decimator compensates for aliasing errors that would otherwise occur when output low resolution image pixel data values are computed as simple weighted sums of pixel data values of values of vertically adjacent pairs of high resolution image pixels.

While the foregoing specification has described preferred embodiment(s) of the present invention, one skilled in the art may make many modifications to the preferred embodiment without departing from the invention in its broader aspects. For example, if H, the number of pixels per line, is set to l, and N is set to the length of an input data sequence, then the decimator will decimate any input data sequence by a factor of P/N. The appended claims therefore are intended to cover all such modifications as fall within the true scope and spirit of the invention.

## Claims

1. A method for decimating a first image formed by a first matrix of input pixel data values of N rows of H pixels per row to generate a second matrix of P rows of H output pixel data values, wherein N, H and P are integers greater than 1, and where N is greater than P, the method comprising the steps of:
(a) computing a weighted sum of a first vertically adjacent pair of the input pixel data vales of said first matrix,
(b) selectively computing a weighted difference of a second vertically adjacent pair of the input pixel data values of said first matrix, and
(c) computing the output pixel data value of said second matrix as a sum of said weighted sum and said weighted difference.

2. The method in accordance with claim 1 within said first vertically adjacent pair of pixel data values and said second vertically adjacent pair of pixel data values have one and only one pixel data value in common.

3. The method in accordance with claim 1 wherein steps a, b and c are repeatedly carried out for each pixel data value of said second matrix.

4. The method in accordance with claim 2 wherein steps a, b and c are repeatedly carried out for each pixel data value of said second matrix.

5. An apparatus for decimating a first image formed by a first matrix of N rows of H pixels per row, to generate a second matrix of pixel data values having P rows of H pixel data values, wherein N, H and P are integers greater than 1, and wherein N is greater than P, the apparatus comprising:
means for computing a weighted sum of a first vertically adjacent pair of data pixel data values of said first matrix,
means for computing a weighted difference of a second vertically adjacent pair pixel data values of said first matrix, and
means for computing the pixel data value of said second matrix as a sum of said weighted sum and said weighted difference.

6. The apparatus in accordance with claim 5 wherein said first vertically adjacent pair of pixel data values and said second vertically adjacent pair of pixel data values have one and only one pixel data value in common.

7. A method for generating a pixel-based image display in response to a video signal representing the image as a first rectangular array of N rows having a plurality of pixels per row, the method comprising the steps of:
digitizing the video signal to produce a first matrix of input pixel data values having N rows of input pixel data values per row, each input pixel data value of said first matrix representing a correspondingly positioned pixel of said first rectangular array;
generating a second matrix of output pixel data values having P rows, each of the rows having a plurality of output pixel data values representing a second image formed by a second rectangular array of P rows of a plurality of pixels per row, each output pixel data value of said second matrix representing a correspondingly positioned pixel of said second rectangular array, wherein N, H and P are integers greater than 1, and wherein N is greater than P, including for each output pixel data value of said second matrix the substeps of
generating at least one coefficient for each of the N rows of the first matrix, where the at least one coefficient is a member of a set of real numbers including zero,
computing a weighted sum of a first vertically adjacent pair of input pixel data values of said first matrix using a first coefficient of the at least one coefficient for one of the N rows containing the first vertical adjacent pair,
selectively computing a weighted difference of a second vertically adjacent pair of input pixel data values of said first matrix using a second coefficient of the at least one of the coefficients for one of the N rows containing the second vertically adjacent pair such that each of the N rows of the first matrix has substantially equal relative influence on the second matrix and where the second coefficient differs from the first coefficient, and
computing the output pixel data value of said second matrix as a sum of said weighted sum and said weighted difference; and
generating said pixel-based image display, wherein each output pixel data value of said second matrix controls a corresponding pixel of said display.

8. The method in accordance with claim 7 wherein said first vertically adjacent pair of pixel data values and said second vertically adjacent pair of pixel data values have one and only one pixel data value in common.

9. The method in accordance with claim 1 wherein the weighted difference is selectively computed so as generate a second matrix where each of the rows N of the first image has substantially the same relative influence on the second matrix.

## Patentansprüche

1. Verfahren zum Dezimieren eines ersten Bildes, das aus einer ersten Matrix an Eingabepixeldatenwerten mit N Zeilen und H Pixeln pro Zeile gebildet ist, um eine zweite Matrix mit P Zeilen mit H Ausgabepixeldatenwerten zu erzeugen, wobei N, H und P ganze Zahlen größer als 1 sind, und wobei N größer als P ist, wobei das Verfahren folgende Schritte umfaßt:
a) Berechnen einer gewichteten Summe eines ersten vertikal benachbarten Paares der Eingabepixeldatenwerte der ersten Matrix,
b) Selektives Berechnen einer gewichteten Differenz eines zweiten vertikal benachbarten Paares der Eingabepixeldatenwerte der ersten Matrix, und
c) Berechnen der Ausgabepixeldatenwerte der zweiten Matrix als eine Summe der gewichteten Summe und der gewichteten Differenz.

2. Verfahren nach Anspruch 1, bei welchem das erste vertikal benachbarte Paar an Pixeldatenwerten und das zweite benachbarte Paar an Pixeldatenwerten einen und nur einen Pixeldatenwert gemeinsam haben.

3. Verfahren nach Anspruch 1, bei welchem die Schritte a, b und c für jeden Pixeldatenwert der zweiten Matrix wiederholt durchgeführt werden.

4. Verfahren nach Anspruch 2, bei welchem die Schritte a, b und c für jeden Pixeldatenwert der zweiten Matrix wiederholt durchgeführt werden.

5. Vorrichtung zum Dezimieren eines ersten Bildes, das aus einer Matrix mit N Zeilen und H Pixeln pro Zeile gebildet ist, um eine zweite Matrix aus Pixeldatenwerten mit P Zeilen mit H Pixeldatenwerten zu erzeugen, wobei N, H und P ganze Zahlen größer als 1 sind, und wobei N größer als P ist, wobei die Vorrichtung folgendes umfaßt:
Mittel zum Berechnen einer gewichteten Summe eines ersten vertikal benachbarten Paares an Datenpixeldatenwerten der ersten Matrix,
Mittel zum Berechnen einer gewichteten Differenz eines zweiten vertikal benachbarten Paares von Pixeldatenwerten der ersten Matrix, und
Mittel zum Berechnen des Pixeldatenwertes der zweiten Matrix als eine Summe der gewichteten Summe und der gewichteten Differenz.

6. Vorrichtung nach Anspruch 5, bei welcher das erste vertikal benachbarte Paar an Pixeldatenwerten und das zweite vertikal benachbarte Paar an Pixeldatenwerten einen und nur einen Pixeldatenwert gemeinsam haben.

7. Verfahren zum Erzeugen einer Pixel-basierten Bildanzeige in Antwort auf ein Bildsignal, das das Bild als eine erste rechteckförmige Anordnung mit N Zeilen und einer Vielzahl an Pixeln pro Zeile darstellt, wobei das Verfahren die folgenden Schritte umfaßt:
Digitalisieren des Bildsignals, um eine erste Matrix an Eingabepixeldatenwerten mit N Zeilen an Pixeldatenwerten pro Zeile zu erzeugen, wobei jeder Eingabepixeldatenwert der ersten Matrix einen entsprechend positionierten Pixel der ersten rechteckförmigen Anordnung darstellt;
Erzeugen einer zweiten Matrix an Ausgabepixeldatenwerten mit P Zeilen, wobei jede der Zeilen eine Vielzahl an Ausgabepixeldatenwerten aufweist, die ein zweites Bild darstellt, das durch eine zweite rechteckförmige Anordnung mit P Zeilen und einer Vielzahl an Pixeln pro Zeile gebildet ist, wobei jeder Ausgabepixeldatenwert der zweiten Matrix einen entsprechend positionierten Pixel der zweiten rechteckförmigen Anordnung darstellt, wobei N, H und P ganze Zahlen größer als 1 sind, und wobei N größer als P ist, wobei für jeden Ausgabepixeldatenwert der zweiten Matrix die folgenden Unterschritte eingeschlossen sind:
Erzeugen wenigstens eines Koeffizienten für jede der N Zeilen der ersten Matrix, wobei der wenigstens eine Koeffizient ein Element einer Menge aus reellen Zahlen einschließlich Null ist,
Berechnen einer gewichteten Summe eines ersten vertikal benachbarten Paares an Eingabepixeldatenwerten der ersten Matrix unter Verwendung eines ersten Koeffizienten des wenigstens einen Koeffizienten für eine der N Zeilen, die das erste vertikal benachbarte Paar enthalten,
Selektives Berechnen einer gewichteten Differenz eines zweiten vertikal benachbarten Paares an Eingabepixeldatenwerten der ersten Matrix unter Verwendung eines zweiten Koeffizienten des wenigstens einen Koeffizienten für eine der N Zeilen, welche das zweite vertikal benachbarte Paar enthält, derart, daß jede der N Zeilen der ersten Matrix im wesentlichen den gleichen relativen Einfluß auf die zweite Matrix hat, und wobei sich der zweite Koeffizient von dem ersten Koeffizienten unterscheidet, und
Berechnen des Ausgabepixeldatenwertes der zweiten Matrix als eine Summe der gewichteten Summe und der gewichteten Differenz; und
Erzeugen der Pixel-basierten Bildanzeige, wobei jeder Ausgabepixeldatenwert der zweiten Matrix einen entsprechenden Pixel der Anzeige steuert.

8. Verfahren nach Anspruch 7, bei welchem das erste vertikal benachbarte Paar an Pixeldatenwerten und das zweite vertikal benachbarte Paar an Pixeldatenwerten einen und nur einen Pixeldatenwert gemeinsam haben.

9. Verfahren nach Anspruch 1, bei welchem die gewichtete Differenz selektiv berechnet wird, um eine zweite Matrix zu erzeugen, bei welcher jede der Zeilen N des ersten Bildes im wesentlichen den gleichen relativen Einfluß auf die zweite Matrix haben.

## Revendications

1. Procédé de décimation d'une première image formée par une première matrice de valeurs de pixels d'entrée, de N rangées de H pixels par rangées, pour générer une seconde matrice de P rangées de H valeurs de pixels de sortie, où N, H et P sont des entiers supérieurs à 1, et où N est supérieur à P, le procédé comprenant les étapes consistant à:
(a) calculer une somme pondérée d'une première paire de valeurs de pixels d'entrée verticalement adjacents de ladite première matrice;
(b) calculer sélectivement une différence pondérée d'une seconde paire des valeurs de pixels d'entrée verticalement adjacents de ladite première matrice, et
(c) calculer la valeur des pixels de sortie de ladite seconde matrice en tant que somme de ladite somme pondérée et de ladite différence pondérée.

2. Procédé selon la revendication 1, dans lequel ladite première paire de valeurs de pixels verticalement adjacents et ladite seconde paire des valeurs de pixels verticalement adjacents possèdent une et une seule valeur de pixel en commun.

3. Procédé selon la revendication 1, dans lequel les étapes a, b et c sont mises en oeuvre de manière répétée pour chaque valeur de pixel de ladite seconde matrice.

4. Procédé selon la revendication 2, , dans lequel les étapes a, b et c sont mises en oeuvre de manière répétée pour chaque valeur de pixel de ladite seconde matrice.

5. Appareil de décimation d'une première image formée par une première matrice de N rangées de H pixels par rangée, pour générer une seconde matrice de valeurs de pixels présentant P rangées de H valeurs de pixels, dans lequel N, H et P sont des entiers supérieurs à 1, et dans lequel N est supérieur à P, l'appareil comprenant:
des moyens pour calculer une somme pondérée d'une première paire de valeurs de pixels verticalement adjacents de ladite première matrice,
des moyens pour calculer une différence pondérée d'une seconde paires de valeurs de pixels verticalement adjacents de ladite première matrice, et
des moyens pour calculer la valeur de pixel de ladite seconde matrice comme une somme de ladite somme pondérée et de ladite différence pondérée.

6. Appareil selon la revendication 5, dans lequel ladite première paire de valeurs de pixels verticalement adjacents et ladite seconde paire de valeurs de pixels verticalement adjacents ont en commun une et une seule valeur de pixel.

7. Procédé pour générer l'affichage d'une image à base de pixels en réponse à un signal vidéo représentant l'image sous la forme d'un premier tableau rectangulaire de N rangées comptant plusieurs pixels par rangée, le procédé comprenant les étapes consistant à:
digitaliser le signal vidéo pour produire une première matrice de valeurs de pixels d'entrée comptant N rangées de H valeurs de pixels d'entrée par rangée, chaque valeur de pixel d'entrée de ladite première matrice représentant un pixel disposé de manière correspondante, dudit premier tableau rectangulaire;
générer une seconde matrice de valeurs de pixels de sortie comptant P rangées, chacune des rangées comptant plusieurs valeurs de pixels de sortie représentant une seconde image formée par un second tableau rectangulaire de P rangées de plusieurs pixels par rangée, chaque valeur de pixel de sortie de ladite seconde matrice représentant un pixel disposé de manière correspondante dudit second tableau rectangulaire, où N, H et P sont des entiers supérieurs à 1, et N est supérieur à P, comprenant pour chaque valeur de pixel de sortie de la seconde matrice, les sous-étapes consistant à:
générer au moins un coefficient pour chacune des N rangées de la première matrice, le coefficient au moins généré étant un membre d'un groupe de nombres entiers comprenant le zéro,
calculer une somme pondérée d'une première paire de valeurs de pixels d'entrée verticalement adjacents de ladite première matrice en utilisant un premier coefficient parmi lesdits coefficients générés pour l'une des rangées contenant la première paire verticalement adjacente,
calculer sélectivement une différence pondérée d'une seconde paire de valeurs de pixels d'entrée verticalement adjacents de ladite première matrice en utilisant un second coefficient parmi lesdits coefficients générés pour l'une des N rangées contenant la seconde paire verticalement adjacente, de telle sorte que chacune des N rangées de la première matrice a une influence relative essentiellement égale sur la seconde matrice et le second coefficient diffère du premier coefficient, et
calculer la valeur du pixel de sortie de ladite seconde matrice en tant que somme de ladite somme pondérée et de ladite différence pondérée, et
générer ledit affichage d'une image à base de pixels, dans laquelle chaque valeur de pixel de sortie de ladite seconde matrice commande un pixel correspondant dudit affichage.

8. Procédé selon la revendication 7, dans lequel la première paire de valeurs de pixels verticalement adjacents et la seconde paire de valeurs de pixels verticalement adjacents ont en commun une et une seule valeur de pixel.

9. Procédé selon la revendication 1, dans lequel la différence pondérée est calculée sélectivement de façon à générer une seconde matrice dans laquelle chacune des rangées N de la première image a essentiellement la même influence relative sur la seconde matrice.
